# EUROPEAN PATENT SPECIFICATION

(11) **EP 1 649 976 B1**
(45) Date of publication and mention of the grant of the patent: **14.02.2007**
(21) Application number: 05108529.8
(22) Date of filing: 16.09.2005
(51) Int. Cl.: B24B 9/10, B23Q 7/06, B23Q 7/18, B27C 1/12

(54) **Machine for working the edges of glass, marble, stone or ceramic materials and the like**
Vorrichtung zur Randbearbeitung von Glasplatten, Marmor, Stein oder Keramik und dergleichen
Dispositif d'usinage du bord de plaques de verre, de marbre, de pierre ou de céramique ou similaire

(30) Priority: 19.10.2004 IT TO20040724
(43) Date of publication of application: 26.04.2006
(73) Proprietor: BIESSE S.p.A., 61100 Pesaro (IT)
(72) Inventor: Busetti, Attilio, 24125 Bergamo (IT)
(74) Representative: Notaro, Giancarlo

(56) References cited:
- EP-A- 0 504 442
- EP-A- 1 175 957
- EP-A- 1 338 381
- US-A- 4 406 091

## Description

The present invention relates to machines for working the edges of plates or plates of glass, marble, stone or ceramic materials and the like of the type including:
- means to feed a plate to be worked horizontally arranged in a direction substantially parallel to two opposite edges of the plate,
- means carried by the structure of the machine for performing the working of the two aforesaid opposite edges of the slap,
- a couple of stopping elements carried by the structure of the machine upstream of the aforesaid working means and movable between an operative position, for abutting against them a front edge of the plate according to a direction strictly orthogonal to the advancing direction, and an inoperative position, shifted upwards or downwards relative to the plane of the plate, and
- control means of the shifting of said stopping elements between their operative position and their inoperative position.

Machines of the type above described are used for performing, for example, grinding and polishing workings of the edges of glass plates. In particular are known and used since long machines of the type above-mentioned, called "bilateral" machines, which include a first working assembly for performing the working of a first couple of edges of a glass plate, and a second working assembly, downstream of the first one, for performing the working of the remaining couple of edges of the plate. In correspondence with the entrance of the second working assembly of the bilateral machine, it is necessary an alignment operation of the front edge (already worked) of the plate according to a direction strictly orthogonal to the advancing direction along the second working assembly. In this way, after the working, the perfect perpendicularity of the edges of the plate exiting the machine is ensured.

In the machines carried out so far, the aforesaid orthogonal alignment operation is performed with a couple of stopping elements which are firmly connected to a timing bar tranversally arranged to the machine and surmounting the advancing plane of the plate, or underlying thereto. Such bar is moved by rotating it around its axis in order to cause the displacement of the stopping elements between the operative position and the inoperative position.

This known solution, if in many cases results simple and reliable, in other cases, particularly when working very wide plates, proves relatively complex and expensive because of the need of ensuring the positioning precision of the stopping elements also in the case of a remarkable length of the bar at which they are fixed.

Devices of the type above-mentioned are also known, wherein the stopping elements are separately driven through fluid, pneumatic or hydraulic actuators, which however involve great difficulties in the adjustments required for ensuring a simultaneity and a promptness of the intervention of the stopping elements and which, in any case, do not prove reliable over time.

The perfect synchronism of the disengagement of the stopping elements is essential because the plate is advanced through continuously moving transport systems, such as timing belts, chains with skids or other, which slide below the plate until it is stopped and which would lead to a non-alignment of the plate in case one of the two stopping elements were disengaged from the plate before the other one.

EP 0 504 442 A discloses the use of separate pushing elements for contacting the rear edge of a plate, thus causing both the movement of the plate towards a working machine and its proper alignment. US 4 406 091 A discloses two pushing elements which are moved towards each other in contact with two opposite edges of a plate, so as to locate the plate properly.

The object of the present invention is to carry out a machine having all the features that have been shown at the beginning of the present description, which does not show in the drawbacks above-mentioned. More generally, an object of the invention is to carry out a machine which ensures to perform the aforesaid orthogonal alignment operation of the front edge of the plate with relatively simple and inexpensive means, also with plates of a remarkable width. Of course, the object of the invention is to carry out a machine of the type above shown, but not necessarily of the "bilateral" type which has been above-mentioned, the adoption of the invention on machines showing a single working line being also possible, wherein the orthogonal alignment operation is carried out on the plate fed to the machine after this latter has already performed a passage through the machine for the working of the first couple of edges of the plate.

In view of attaining these and further purposes, the object of the invention is a machine having all the features of claim 1.

Thanks to the aforesaid features, the objects of the invention are attained without using the support bar of the stopping elements which was foreseen in the known machines above-mentioned, and without using hydraulic or pneumatic means hard to adjust.

In a preferred embodiment, each of the aforesaid stopping elements is brought at the end of a stem slidably mounted in a fixed sliding casing to the structure of the machine having a gear teeth in engagement mesh with a driving pinion, which is in turn driven by an electric motor.

Always preferably, each one of the stopping elements is carried by a stem slidably mounted between the aforesaid operative position and the aforesaid inoperative position in a support structure and the movement of which is operated by an electric motor through a mechanical transmission. In a first execution example, the aforesaid mechanical transmission includes a gear teeth obtained on the stem and a toothed pinion engaging with the gear teeth and driven by the electric motor. Alternatively, the aforesaid mechanical transmission may include, for example, a screw/leadscrew system.

Always in a preferred embodiment, the aforesaid support stem of the stopping element is placed with its axis slightly slanted relative to the vertical, such as that a displacement of the stopping element in the direction of its inoperative position also involves a separation of the stopping element from the front edge of the plate in the advancing direction of the plate.

Further features and advantages of the invention will result from the following description with reference to the enclosed drawings, which are given by mere way of not limiting example, wherein:
- figure 1 is a partial diagrammatic view of a machine according to the invention,
- figure 2 is a diagrammatic side view in an enlarged scale of one of the two actuator elements and the relative control means, forming part of the machine of figure 1, and
- figure 3 is an exploded perspective view of the main components of the assembly associated with the stopping element.

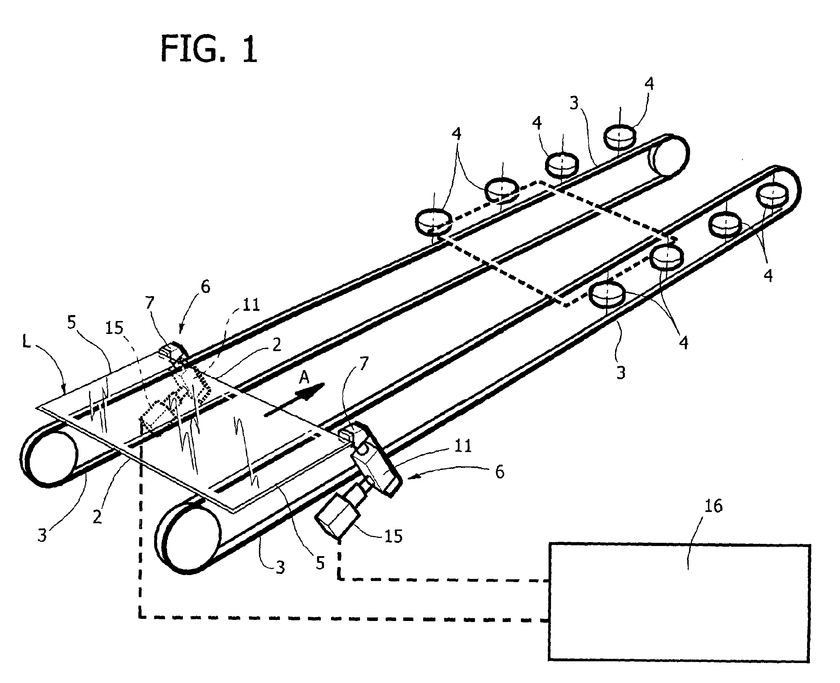

Referring to the figure 1, numeral 1 is a machine for working the edges of glass plates or the like. In the specific shown case, the visible part of the machine corresponds to the entrance of the second working assembly of a bilateral machine or the entrance assembly of a single machine. Therefore, in this case the glass plate arriving in the position shown in the drawing has already undergone the working of a first couple of edges 2. The plate, generally shown with the reference L, is advanced in an A direction by keeping it placed in an horizontal plane, through a couple of toothed transport belts 3 or chains with skids. The building details relating to the conveyor belts 3 and the motor means which drive the same are not shown herein, as such details can be carried out in any known manner and do not lie per se in the scope of the present invention. The removal of these details further makes the drawings of a prompter and easier understanding. The working line towards which the plate L is fed shows two arrays of grinding wheels 4 assigned to perform the working, for example the grinding or the polishing of the two edges 5 orthogonal to the edges 2 already previously worked. As already shown, before carrying out this working, it is necessary to ensure that the plate L is moved forward in the A direction with its front edge 2 strictly placed according to a direction orthogonal to the A direction. In this way, the squaring of the L plate is ensured, that is to say the perfect perpendicularity of the two couple of edges 2, 5 of the plate once the working has been performed.

For the purpose of carrying out such operation of orthogonal alignment, to the machine structure two groups supporting two stopping elements are associable.

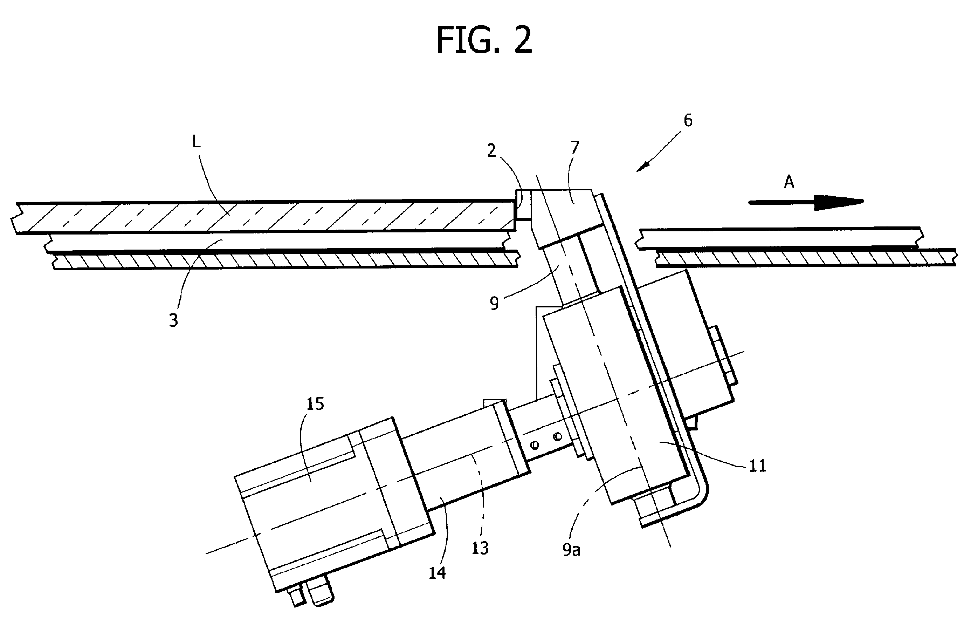

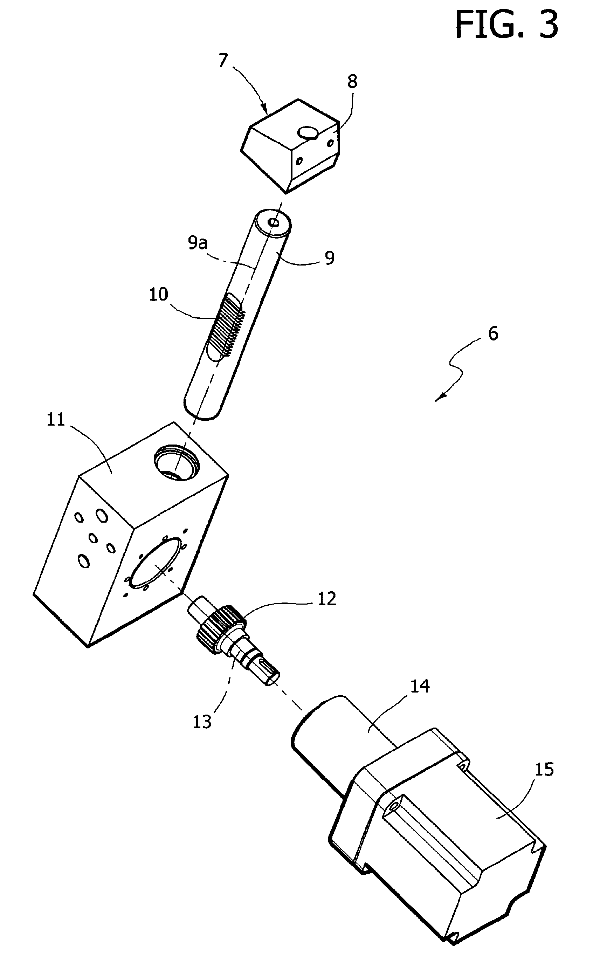

With reference to the figures 2, 3, each stopping element 6 includes a body 7 defining a stopping surface 8 against which the front edge 2 of the L plate is abutting. The body 7 is firmly fixed to the upper end of a cylindrical stem 9 in which a gear teeth 10 is obtained. The cylindrical stem 9 is slidably supported within a casing 11 and has its gear teeth 10 engaging with a toothed pinion 12 which is rotatably supported in the casing 11 around an axis 13 orthogonal to the axis of the stem 9. The pinion 12 is carried by a shaft connected with the output shaft of a speed reducer assembly, including a reducer 14 and an electric motor 15.

Yet with reference to the figure 1, the two electric motors 15 associated with the two stopping elements 6 are controlled in a synchronous way by an electronic control unit 16 for simultaneously driving a displacement of the stopping elements 6 between their operative position and their inoperative position. In the case of the specific shown example, a rotation of each electric motor 15 determines a rotation of the relative toothed pinion 12, which, through the engagement with the gear teeth 10, causes a linear displacement of the stem 9. In this way, each body 7 is movable between an operative elevated position, wherein the stopping surface 8 is in such a position that can intercept the front edge 2 of the glass plate L, and an inoperative lowered position, wherein the body 7 is spaced-apart downwards from the transport plane of the plate, so as not to interfere therewith.

The perfect synchronism of the movement of the two stopping elements 6 is essential, as the conveyor belts 3 are continuously moving and slide below the plate L until it is held fast by the two stopping elements 6. Should one of the two elements disengage itself from the plate before the other one, an advancing movement of the plate on a side thereof relative to the other will result, which would compromise the proper alignment of the front edge along a direction perfectly orthogonal to the advancing direction. The arrangement described and shown herein then represents a particularly simple and reliable way to obtain the desired result.

It is also important, for the same reasons above-mentioned, that the disengagement movement of the stopping elements 6 of the plate is as fast as possible. For this purpose, as it is apparent for example from figure 2, the axis 9a of the stem 9 is arranged slanted relative to the vertical line, such that when the body 7 is lowered, it is instantaneously spaced-apart also in the longitudinal A direction with respect to the front edge of the plate. The arrangement of the mechanical transmission between the electric motor 15 and the stem 9 is designed so as to ensure that the "escape" speed of the stopping body 7 relative to the front edge 2 of the plate is higher than the transport speed performed by the conveyor belts 3, whereby as soon as the electric motors 15 are driven for lowering the two stopping elements 6, any contact between the front edge 2 and such stopping elements is immediately ceased, whereby the keeping of the orthogonal alignment of the front edge 2 is ensured.

Obviously, without prejudice to the principle of the invention, construction details and embodiments could widely vary with respect to what has been described and shown by mere way of example, however without leaving the scope of the present invention. Therefore, the arrangement and the conformation of the mechanical transmission which converts the rotatory movement of the electric motor 15 in a linear movement of the support rod 9 can also be completely different from that described herein. In fact, the structure of the mechanical transmission may foresee the use of a screw/leadscrew structure driven by an electric motor coaxial with the screw, wherein the rotatory movement of the electric motor for driving the screw is exploited. The same conformation of each stopping element 6 can be completely different from that described herein by mere way of example. It is apparent that the principle which is at the basis of the invention is to provide electrically driven actuators for the discrete control of the two stopping elements which are controlled in a synchronous way. Therefore, also electric actuator means entirely different from the electric motors 15 shown herein can be used. Finally, the stopping elements 6 can be supported, of course, from the top instead of the bottom, with respect to the plane of the plate, so as to shift themselves upwards instead of downwards, when they are retracted in their inoperative position.

## Claims

1. Machine for working the edges of plates of glass, marble, stone and ceramic materials and the like, including:
- means (13) for advancing a plate to be worked (L) horizontally arranged in a direction (A) substantially parallel to two opposite edges (5) of the plate (L),
- means (4) carried by the machine structure for carrying out the working of the two aforesaid opposite edges (5) of the plate (L),
- a couple of stopping elements (6) carried by the machine structure upstream of the aforesaid working means, and movable between an operative position, for abutting against them a front edge (2) of the plate (L) according to a direction strictly orthogonal to the advancing direction (A), and an inoperative position, shifted upwards or downwards with respect to the plane of the plate, and
- means (15, 16, 12, 10) for controlling the displacement of said stopping elements (6) between their operative position and their inoperative position,
**characterized in that** said control means include two electrically driven separate actuators (15), for the control of the two stopping elements (6) respectively, and electronic control means (16) for controlling in a synchronized way said electrically driven actuators (15), so as to move simultaneously the two stopping elements (6) from their operative positions, in which they act as aligning stops for the front edge (2) of the advancing plate (L), to their inoperative positions, so as to simultaneously allow the advancing movement of said plate (L), without altering the previously established proper alignment of the front edge (2) of the plate (L).

2. Machine according to claim 1, **characterized in that** each of said actuators includes an electric motor (15).

3. Machine according to claim 2, **characterized in that** each of said stopping elements (6) is carried by a stem (9) slidably mounted between the aforesaid operative position and the aforesaid inoperative position within a support structure (11) and whose movement is controlled by said electric motor (15) through a mechanical transmission (9, 10, 12).

4. Machine according to claim 3, **characterized in that** the aforesaid mechanical transmission includes a gear teeth (10) obtained on the stem (9) and a toothed pinion (12) engaging with the gear teeth and controlled by said electric motor (15).

5. Machine according to claim 3, **characterized in that** the aforesaid mechanical transmission includes a screw/leadscrew system.

6. Machine according to claim 3, **characterized in that** said support stem (9) is placed with its axis (9a) slanted relative to a vertical direction, such that a displacement of the stopping element (6) towards its inoperative position also involves a separation of the stopping element (6) from the front edge (2) of the plate (L) in the advancing direction (A) of the plate (L).

## Patentansprüche

1. Vorrichtung zur Randbearbeitung von Platten aus Glas, Marmor, Stein und keramischen Materialien und dergleichen, umfassend:
- ein Mittel (13) zum Vorbewegen einer Platte (L), die bearbeitet werden soll, die horizontal in einer Richtung (A) im Wesentlichen parallel zu zwei gegenüberliegenden Rändern (5) der Platte (L) angeordnet ist,
- ein Mittel (4), das von dem Vorrichtungsaufbau zum Ausführen der Bearbeitung der zwei zuvor aufgeführten gegenüberliegenden Ränder (5) der Platte (L) getragen ist,
- ein Paar Stoppelemente (6), die vorgeschaltet zu dem zuvor aufgeführten Bearbeitungsmittel durch den Vorrichtungsaufbau getragen sind, und die zwischen einer Betriebsposition, um gegen diese einen vorderen Rand (2) der Platte (L) gemäß einer Richtung strikt orthogonal zu der Vorbewegungsrichtung (A) anzugrenzen, und einer Ruheposition, die nach oben oder unten in Bezug auf die Ebene der Platte versetzt ist, bewegbar sind, und
- ein Mittel (15, 16, 12, 10) zum Steuern des Versatzes der Stoppelemente (6) zwischen deren Betriebsposition und deren Ruheposition,
**dadurch gekennzeichnet, dass** die Steuermittel zwei elektrisch angetriebene, separate Aktuatoren (15) für die entsprechende Steuerung der zwei Stoppelemente (6) und ein elektronisches Steuermittel (16) für die synchronisierte Steuerung der elektrisch angetriebenen Aktuatoren (15) umfasst, um so gleichzeitig die zwei Stoppelemente (6) aus deren Betriebsposition, in welcher sie als Ausrichtungsstopper für den vorderen Rand (2) der vorbewegenden Platte (L) wirken, in deren Ruhepositionen zu bewegen, um so gleichzeitig die vorbewegende Bewegung der Platte (L) zu ermöglichen, ohne die vorher erzeugte korrekte Ausrichtung des vorderen Randes (2) der Platte (L) zu verändern.

2. Vorrichtung nach Anspruch 1, **dadurch gekennzeichnet, dass** jeder der Aktuatoren einen Elektromotor (15) umfasst.

3. Vorrichtung nach Anspruch 2, **dadurch gekennzeichnet, dass** jedes der Stoppelemente (6) von einem Schaft (9) getragen ist, der gleitbar zwischen der zuvor aufgeführten Betriebsposition und der zuvor aufgeführten Ruheposition innerhalb eines Stützaufbaus (11) montiert ist und dessen Bewegung durch den Elektromotor (15) durch ein mechanisches Getriebe (9, 10, 12) gesteuert ist.

4. Vorrichtung nach Anspruch 3, **dadurch gekennzeichnet, dass** das zuvor aufgeführte mechanische Getriebe einen Zahnradzahn (10), der an dem Schaft (9) erhalten ist, und ein Antriebsritzel (12), das mit dem Zahnradzahn im Eingriff steht und durch den Elektromotor (15) gesteuert ist, umfasst.

5. Vorrichtung nach Anspruch 3, **dadurch gekennzeichnet, dass** das zuvor aufgeführte mechanische Getriebe ein Schrauben-/Gewindespindel-System umfasst.

6. Vorrichtung nach Anspruch 3, **dadurch gekennzeichnet, dass** der Stützschaft (9) mit dessen Achse (9a), abgeschrägt relativ zu einer vertikalen Richtung so platziert ist, dass ein Versatz des Stoppelements (6) zu dessen Ruheposition auch eine Trennung des Stoppelements (6) von dem vorderen Rand (2) der Platte (L) in der Vorbewegungsrichtung (A) der Platte (L) umfasst.

## Revendications

1. Machines d'usinage des bords de plaques de verre, de marbre, de pierre ou de céramique et autres matériaux, comprenant :
des moyens (13) pour faire avancer une plaque (L) destinée à être usinée agencée horizontalement dans une direction (A) sensiblement parallèle à deux bords opposés (5) de la plaque (L),
des moyens (4) supportés par la structure de la machine pour réaliser l'usinage des deux bords opposés (5) susmentionnés de la plaque (L),
un couple d'éléments de butée (6) supportés par la structure de la machine en amont desdits moyens d'usinage susmentionnés et mobiles entre une position opérationnelle, pour faire venir en butée contre eux un bord avant (2) de la plaque (L) selon une direction strictement orthogonale à la direction d'avance (A), et une position non opérationnelle, décalée vers le haut ou vers le bas par rapport au plan de la plaque, et
des moyens de commande (15, 16, 12, 10) du déplacement desdits éléments de butée entre leur position opérationnelle et leur position non opérationnelle,
**caractérisée en ce que** lesdits moyens de commande comprennent deux actionneurs entraînés électriquement (15) séparés, pour la commande des deux éléments de butée (6) respectivement, et des moyens de commande électroniques (16) pour commander d'une manière synchrone lesdits actionneurs entraînés électriquement (15), de façon à déplacer simultanément les deux éléments de butée (6) de leurs positions opérationnelles, dans laquelle ils agissent comme butées d'alignement pour le bord avant (2) de la plaque (L) avançant, vers leurs positions non opérationnelles, de façon à permettre simultanément le mouvement d'avance de ladite plaque (L), sans altérer l'alignement correct établi auparavant du bord avant (2) de la plaque (L).

2. Machine selon la revendication 1, **caractérisée en ce que** chacun desdits actionneurs comprend un moteur électrique (15).

3. Machine selon la revendication 2, **caractérisée en ce que** chacun desdits éléments de butée (6) est supporté par une tige (9) montée à coulissement entre la position opérationnelle susmentionnée et la position non opérationnelle susmentionnée dans une structure de support (11) et dont le mouvement est commandé par ledit moteur électrique (15) par l'intermédiaire d'une transmission mécanique (9, 10, 12).

4. Machine selon la revendication 3, **caractérisée en ce que** la transmission mécanique susmentionnée comprend des dents d'engrenage (10) obtenues sur la tige (9) et un pignon denté (12) en prise avec les dents d'engrenage et commandé par ledit moteur électrique (15).

5. Machine selon la revendication 3, **caractérisée en ce que** ledit mécanisme de transmission comprend un système vis/vis-mère.

6. Machine selon la revendication 3, **caractérisée en ce que** ladite tige (9) de support est placée avec son axe (9a) incliné par rapport à la direction verticale, de telle manière qu'un déplacement de l'élément de butée (6) vers sa position non opérationnelle implique aussi une séparation de l'élément de butée (6) du bord avant (2) de la plaque (L) dans la direction d'avance (A) de la plaque (L).
